# EUROPEAN PATENT APPLICATION

(11) **EP 2 660 922 A1**
(43) Date of publication of application: **06.11.2013**
(21) Application number: 11852606.0
(22) Date of filing: 26.12.2011
(51) Int. Cl.: H01M 10/0585, H01M 4/13, H01M 4/139, H01M 10/052, H01M 10/0562, H01M 10/0565

(54) **MANUFACTURING METHOD FOR THIN FILM LITHIUM SECONDARY BATTERY, AND THIN FILM LITHIUM SECONDARY BATTERY**

(30) Priority: 27.12.2010 JP 2010290976
(71) Applicant: Baba, Mamoru, Morioka-shi Iwate 020-0112 (JP)
(72) Inventor: YE, Rongbin, Morioka-shi Iwate 020-8550 (JP); KIKUCHI, Masashi, Chigasaki-shi Kanagawa 253-8543 (JP)
(74) Representative: Willquist, Sofia Ellinor
(86) International application number: PCT/JP2011/080057
(87) International publication number: WO 2012/090929

(57) **Abstract**

A thin film lithium secondary battery (10) manufacturing method comprises: a positive electrode active material layer formation step for forming a positive electrode active material layer (13) on a substrate (11); an electrolyte layer formation step for forming an electrolyte layer (14) on the positive electrode active material layer (13); a negative electrode active material layer formation step for forming a negative electrode active material layer (16) on the electrolyte layer (14); and a laser annealing step for irradiating a laser light on at least one non-crystalline layer among the positive electrode active material layer (13), the electrolyte layer (14), and the negative electrode active material layer (16), and modifying the non-crystalline layer such that the layer is crystalline or in a crystalline-precursor state.

## Description

### TECHNICAL FIELD

The present invention relates to a method for manufacturing a thin film lithium-ion rechargeable battery, and to a thin film lithium-ion rechargeable battery.

### BACKGROUND ART

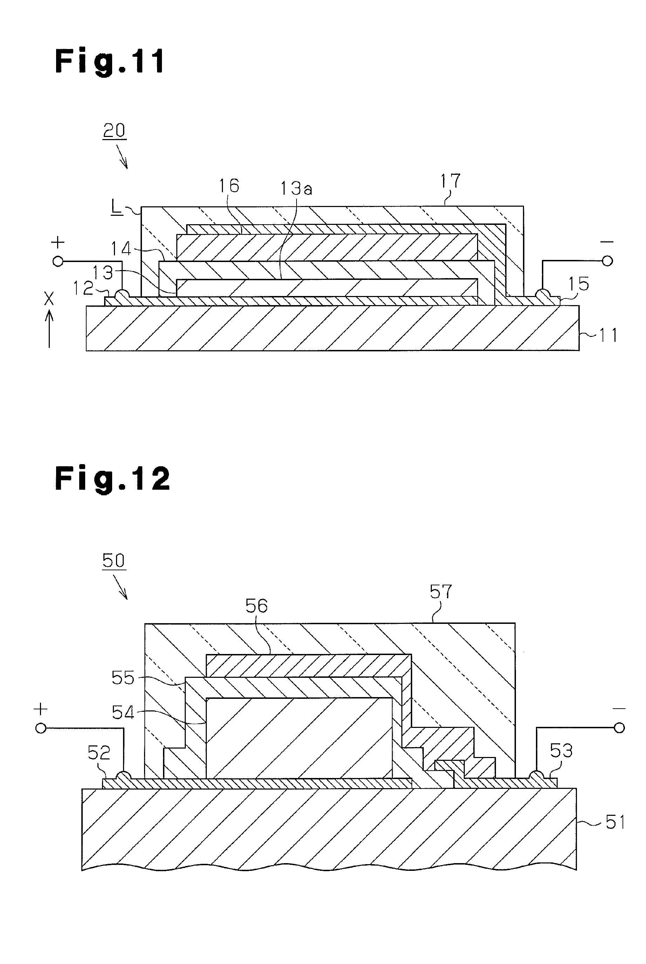

Thin film lithium rechargeable batteries have become popular because they are small, light, and have high energy density. Referring to Fig. 12, a thin film lithium-ion rechargeable battery 50 includes a substrate 51 formed from a heat resistant material such as mica. A positive electrode collector layer 52 and a negative electrode collector layer 53 are arranged on the substrate 51. A positive electrode active material layer 54, an electrolyte layer 55, and a negative electrode active material layer 56 are sequentially stacked on the positive electrode collector layer 52. These layers are covered by a protective layer 57. When manufacturing the thin film lithium-ion rechargeable battery, the amorphous positive electrode active material layer is crystallized by undergoing a heat treatment (for example, refer to patent document 1).

### PRIOR ART DOCUMENT

Patent Document 1: Japanese Laid-Open Patent Publication No. 2007-5279

### SUMMARY OF THE INVENTION

### PROBLEMS THAT ARE TO BE SOLVED BY THE INVENTION

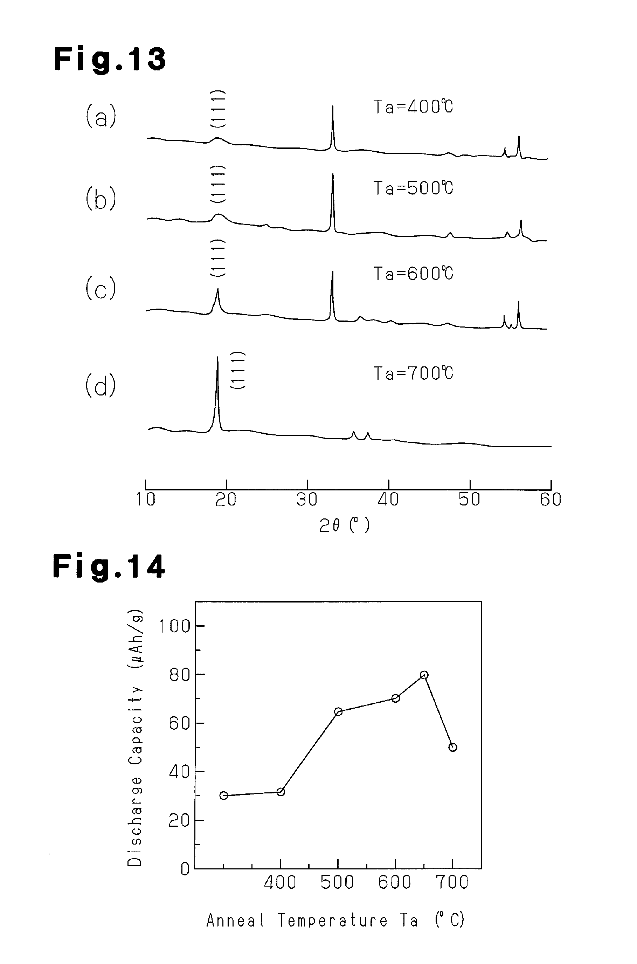

The heat treatment of the active material will now be described in detail. Figs. 13A to 13D show the X-ray diffraction spectrums (2θ-θ scan) for the heat treatment temperature of lithium manganese oxide (LiMn₂O₄) formed in a sputtering process. Fig. 14 is a graph showing the correlation of the heat treatment temperature of a LiMn₂O₄ layer and the discharge capacity of a thin film lithium-ion rechargeable battery including the LiMn₂O₄ layer.

As shown in Fig. 13, when a heat treatment is performed on the amorphous LiMn₂O₄ layer, a diffraction peak deriving from a (111) plane of the LiMn₂O₄ layer appears when the temperature Ta of the heat treatment is in the range from 400°C to 700°C. This is because when the temperature Ta is in the above range (400°C to 700°C) during the heat treatment, most of the LiMn₂O₄ layer becomes a spinel structure, and the layer is entirely crystallized.

Further, in Fig. 14, when the temperature Ta of the heat treatment performed on the LiMn₂O₄ layer is in the temperature range from 500°C to 700°C, in comparison with when the heat treatment temperature Ta is 400°C, the discharge capacity is increased by two times or greater. In other words, when the heat treatment is performed under the temperature of 500°C to 700°C on the amorphous LiMn₂O₄ layer, the layer is entirely crystallized. This improves the battery properties of the rechargeable battery.

However, in a heat treatment that crystallizes the positive electrode active material layer in a high temperature range such as that described above (500°C to 700°C), the laminate stacking each layer on the substrate is entirely heated for one hour or longer, which is a long period. Thus, a substrate that resists deformation and reformation under such harsh temperature conditions is needed. This limits the material and shape, such as thickness, of the substrate.

Accordingly, it is an object of the present invention to provide a method for manufacturing a thin film lithium-ion rechargeable battery and a thin film lithium-ion rechargeable battery that improve the degree of freedom for the material.

### MEANS FOR SOLVING THE PROBLEM

One aspect of the present invention is a method for manufacturing a thin film lithium-ion rechargeable battery. The method includes a first active material layer formation step of forming a first active material layer on a base, an electrolyte layer formation step of forming an electrolyte layer on the first active material layer, a second active material layer formation step of forming a second active material layer on the electrolyte layer, and an annealing step of emitting a laser beam to an amorphous layer among one of the first active material layer, the electrolyte layer, and the second active material layer and reforming the amorphous layer to a crystalline or crystal precursor state.

A second aspect of the present invention is a thin-film lithium-ion rechargeable battery. The thin-film lithium-ion rechargeable battery is manufactured in the manufacturing method of the first aspect.

### BRIEF DESCRIPTION OF THE DRAWINGS

Fig. 1 is a cross-sectional view showing a main portion of a thin film lithium-ion rechargeable battery.
Fig. 2 is a flowchart showing a method for manufacturing a first embodiment of a thin film lithium-ion rechargeable battery.
Fig. 3 is a Raman spectrum of a laser-annealed positive electrode active material.
Fig. 4 is a graph showing the intensity of the annealed positive electrode active material for each energy density.
Fig. 5 is an X-ray diffraction spectrum for the laser-annealed LiMn₂O₄.
Fig. 6 is a graph showing the diffraction intensity and half-value width of a peak derived from a (111) plane.
Fig. 7 is a graph showing an increase in the battery capacity resulting from a laser annealing process.
Fig. 8 is a flowchart showing a second embodiment of a method for manufacturing a thin film lithium-ion rechargeable battery.
Fig. 9 is a flowchart showing a third embodiment of a method for manufacturing a thin film lithium-ion rechargeable battery.
Fig. 10 is a flowchart showing a fourth embodiment of a method for manufacturing a thin film lithium-ion rechargeable battery.
Fig. 11 is a cross-sectional view showing a main portion of another example of a thin film lithium-ion rechargeable battery.
Fig. 12 is a cross-sectional view showing a main portion of a thin film lithium-ion rechargeable battery.
Figs. 13A to 13D are X-ray diffraction spectrums for the annealing temperature of LiMn₂O₄ that has undergone heat treatment.
Fig. 14 is a graph showing the correlation of the annealing temperature and the discharge capacity.

### EMBODIMENTS OF THE INVENTION

### First Embodiment

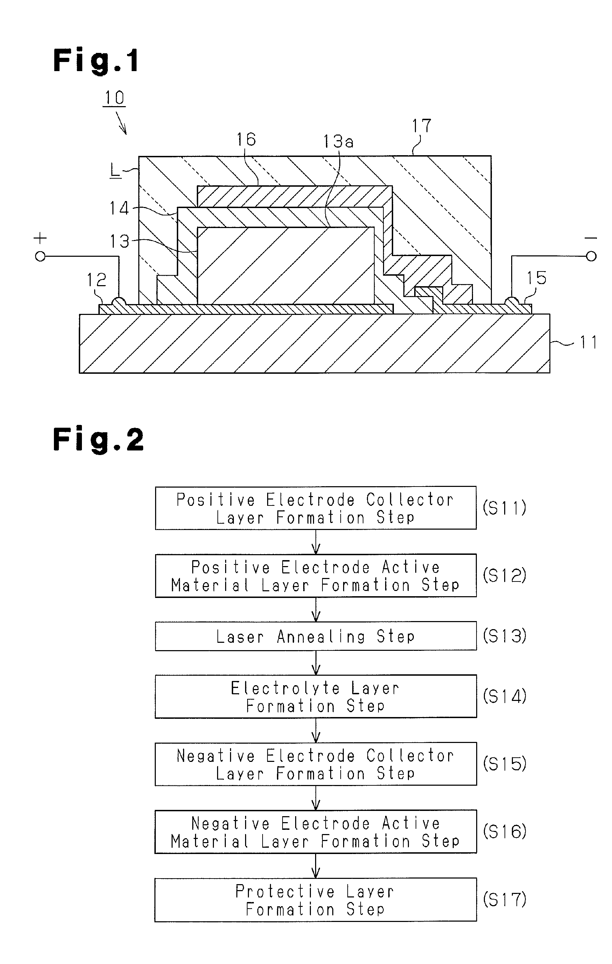

One embodiment of the present invention will now be described with reference to Figs. 1 to 7.

Fig. 1 is a cross-sectional view showing a main portion of a thin film lithium-ion rechargeable battery 10. The thin film lithium-ion rechargeable battery 10 includes a laminate L formed by different layers on a base 11.

The shape of the base 11 is not particularly limited. In the present embodiment, the base 11 may have a thin form, such as that of a sheet, film, or thin plate. Although the material of the base 11 is not particularly limited, a material having a low melting point (e.g., 300°C or less) or a material having a low upper temperature limit (e.g., 300°C or less) may be used. For example, the material of the base 11 may be a material having a melting point of 200°C or less, such as polypropylene (melting point of approximately 130°C to 170°C) or polyethylene (melting point of approximately 100°C to 150°C), a material having a melting point of 300°C or less, such as polyethylene terephthalate (melting point of approximately 264°C), of a material having a melting point or upper temperature limit of 500°C or less, such as polyimide (upper temperature limit or decomposition temperature of 500°C). Further, the material of the base 11 may be a material having a relatively low melting point or upper temperature limit (e.g., 500°C or less) to serve as the substrate of the thin film lithium-ion rechargeable battery 10, such as glass (upper temperature limit of 380°C or less or 500°C or less). The material of the base 11 may of course be a material having a moderate upper limit temperature, such as SUS (upper temperature limit 700°C to 800°C), or a material having high heat resistance, such as mica (upper temperature limit of 600°C to 1000°C) and alumina (upper temperature limit of 1000°C or greater). Among the above materials, the base 11 may be formed by stacking layers of different materials. The upper temperature limit refers to the heated temperature when deformation or reformation occurs such that the material can no longer be used as the base of a thin film lithium-ion rechargeable battery.

The positive electrode collector layer 12 is stacked on a portion of the surface of the base 11. The positive electrode collector layer 12 is conductive and formed from a known material generally used as a collector. For example, molybdenum (Mo), nickel (Ni), chromium (Cr), aluminum (Al), copper (Cu), gold (Au), and vanadium (V) may be used.

The positive electrode active material layer 13 may be stacked as a first active material layer on the positive electrode collector layer 12. The material of the positive electrode active material layer 13 only needs to be capable of occluding and releasing lithium ions and, preferably, may be a lithium transition metal compound. The lithium transition metal compound may be, for example, LiM1ₓO_{z} or LiM1ₓM2_{y}O_{z} (where M1 and M2 are transition metals, and x, y, and z are real numbers). More specifically, lithium manganese oxide (LiₓMn_{y}O_{z}, where x, y, and z are real numbers), such as LiMn₂ and LiMn₂O₄, or LiCoO₂, LiNiO₂, and LiFePO₄ may be used. Each of the above materials may be combined to form the positive electrode active material layer 13.

The positive electrode active material layer 13 is an amorphous layer stacked on the positive electrode collector layer 12 and undergoes laser annealing from a surface side of the amorphous layer. As a result, at least a surface layer portion of the amorphous layer (0.2 µm to 0.8µm in depth-wise direction, or stacking direction) or the entire layer is crystallized. Otherwise, the surface layer portion or the entire layer shifts to a crystal precursor state. In the present embodiment, crystalline (or crystalline state) refers to a state including monocrystalline, polycrystalline, and microcrystalline, and has a peak in an X-ray analysis resulting from reformation caused by laser annealing. A crystal precursor state refers to a dispersion state of microcrystals that improve the battery property in which a peak is not detected in an X-ray analysis but detected in a Raman spectrum analysis.

Laser annealing improves the battery properties for the following reasons. For example, when using amorphous LiCoO₂ and LiNiO₂ as the positive electrode active material, laser annealing is performed from the surface of the amorphous layer so that at least the surface layer portion of the amorphous layer may be reformed to a crystal precursor state in which crystals of a bedded salt structure or microcrystals of a bedded salt structure are dispersed. In the bedded salt structure, transition metal and lithium form single layers that are alternately stacked at two types of octahedral sites between oxygen layers. Space between the layers of the bedded salt structure forms a passage for lithium ions and allows for dispersion of the lithium ions. Thus, even if the entire amorphous positive electrode active material layer 13 is not completely crystallized, a large discharge capacity can be obtained.

When stacking LiMn₂O₄ that is amorphous as the positive electrode active material, laser annealing is performed from the amorphous layer surface so that at least the surface layer portion has a spinel structure. A spinel structure refers to a structure in which lithium ions occupy tetrahedral positions and manganese ions occupy octahedral positions. Further, a spinel structure is bedded as viewed from the (111) direction. The space between the layers of the bedded structure forms a passage for lithium ions. This enhances the dispersion of lithium ions and thus obtains a large discharge capacity even in, for example, a crystal precursor state. Annealing during a heat process completely crystallizes the entire positive electrode active material layer 13. However, the inventors have found through experiments that the battery properties are improved for a thin film lithium-ion rechargeable battery 10 when the entire positive electrode active material layer 13 is not completely crystallized, that is, when only the surface layer portion is crystallized, when the entire layer is in a crystal precursor state, or when only the surface layer is in a crystal precursor state.

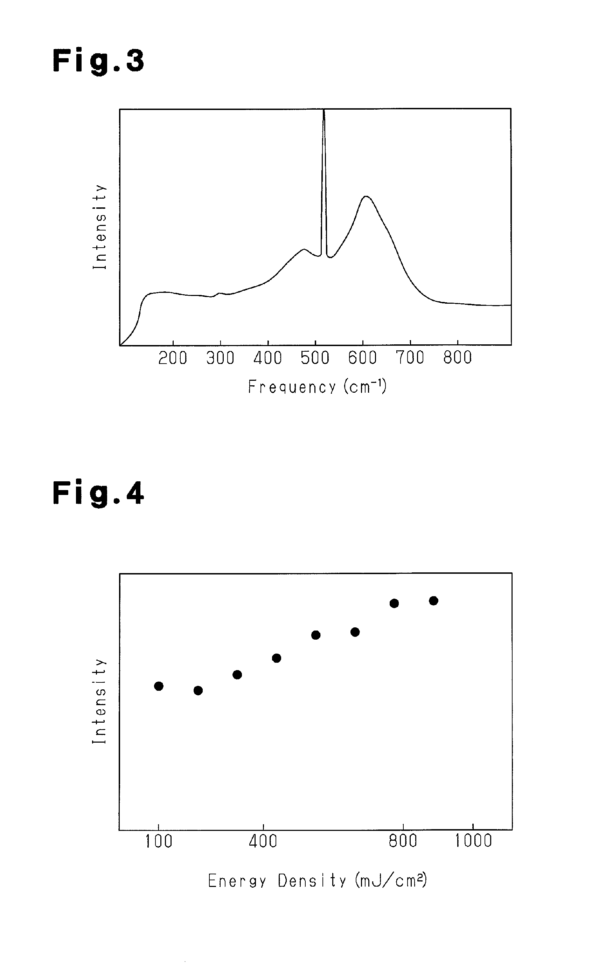

The positive electrode active material layer 13 was laser-annealed to obtain samples, and a Raman spectral analysis was performed on the samples. Fig. 3 shows the obtained spectrum. The samples were obtained under a pressure of 157 mPa using a sputtering gas of Ar (flow rate of 50 sccm) to form LiMn₂O₄ having a thickness of 300 nm on a silicon substrate. For each sample, laser annealing was performed under the conditions shown below. The energy density was gradually changed for each sample. The spectrum shown in Fig. 3 is the spectrum for a sample in which the laser energy density was 312 mJ/cm².
laser wavelength: 532 nm
scanning speed: 8 mm/sec
beam long axis: 100 mm
beam short axis: 40 µm
atmosphere temperature: room temperature
laser output (energy density): 20 W (104 mJ/cm²), 40 W (208 mJ/cm²), 60 W (312 mJ/cm²), 80 W (417 mJ/cm²), 100 W (521 mJ/cm²), 120 W (625 mJ/cm²), 140 W (729 mJ/cm²), 160 W (833 mJ/cm²)

For each sample, in which the laser energy density during annealing was 104 mJ/cm² to 312 mJ/cm², there was practically no peak caused by a (111) plane in the X-ray analysis that will be described later. However, in the Raman spectrum, there was a peak caused by reformation of a crystal precursor state in the vicinity of 480 cm⁻1 and in the range from 600 cm⁻¹ or greater to 610 cm⁻¹ or less. Further, there was a peak caused by the (111) surface when the energy density exceeded 312 mJ/cm².

Fig. 4 shows the peak intensity in the vicinity of 600 cm⁻¹ in the vicinity of each spectrum obtained by performing the Raman spectral analysis on each of the samples annealed at different laser energy densities. The samples all included a peak in the range of 600 cm⁻¹ or greater and 610 cm⁻¹ or less, and the intensity increased as the energy density increased.

More specifically, when the laser energy density is relatively low (e.g., 312 mJ/cm² or less), it is assumed that the positive electrode active material layer 13 shifts to a crystal precursor state. When the laser energy density is relatively high (e.g., greater than 312 mJ/cm²), it is assumed that the positive electrode active material layer 13 is crystallized.

An electrolyte layer 14 is stacked on the positive electrode active material layer 13. The electrolyte layer 14 is formed from a known material used as an electrolyte layer and may be obtained, for example, by including a solute of a lithium salt such as LiPE₆ and LiClO₄ in a polymeric material such as Li₃PO₄, polyethylene oxide, polypropylene oxide, and polyethylene oxide derivative. The material may also be a gel polymer material impregnating non-aqueous electrolyte that dissolves the solute in an organic solvent. Further, as the electrolyte layer 14, an inorganic solid electrolyte such as Li₂S, Li₃PO₄, LiPON, or Li-Si-Al(P) composite oxide may be used. Moreover, each of the above materials may be combined to form the electrolyte layer 14.

A negative electrode collector layer 15 is stacked on an end of the electrolyte layer 14 and a portion in the surface of the base 11. The negative electrode collector layer 15 may be formed from the same material as the positive electrode collector layer 12.

Further, a negative electrode active material layer 16 is stacked as a second active material layer on the surface of most of the electrolyte layer 14 and a portion of the negative electrode collector layer 15. The negative electrode active material layer 16 only needs to be a material capable of occluding and releasing lithium ions. For example, a carbon material, such as graphite, coke, or a polymer sinter, C-Si composite material, metal lithium, an alloy of lithium and another metal, and a metal oxide or metal sulfide, such as TiO₂, Nb₂O₅, SnO₂, Fe₂O₃, and SiO₂ may be used. The above materials may be combined to form the negative electrode active material layer 16.

A protective layer 17 is stacked to cover a portion of the positive electrode collector layer 12, a portion of the electrolyte layer 14, a portion of the negative electrode collector layer 15, and the entire surface of the negative electrode active material layer 16. The material of the protective layer 17 is not particularly limited, and a known material may be used as the protective layer 17, such as polytetrafluoroethylene and silica.

Fig. 2 is a flowchart showing a method for manufacturing the thin film lithium-ion rechargeable battery 10.

In a positive electrode collector layer formation step (step S11), a known method is used to form the thin film of the positive electrode collector layer 12 on the base 11. For example, the positive electrode collector layer 12 is formed by performing physical vapor deposition (PVD), such as vapor deposition or sputtering, or chemical vapor deposition (CVD), such as thermal CVD.

When the electrode collector layer 12 is formed, a positive electrode active material layer formation step (step S12) is performed as the first active material layer formation step. In this step, the positive electrode active material layer 13 is formed on the positive electrode collector layer 12 by performing sputtering, electronic beam vapor deposition, and the like.

When the positive electrode active material layer 13 is stacked, a laser annealing step (step S13) is performed on the positive electrode active material layer 13. In this step, a laser beam is emitted from the surface of the amorphous positive electrode active material layer 13 in a non-heated state under a room temperature or normal temperature (e.g., 0°C to 50°C). A light source that is used is capable of outputting a laser beam having a wavelength and output allowing for crystallization of the amorphous positive electrode active material. The preferable light source has a wavelength having a large absorption coefficient for, in particular, a negative electrode active material and a positive electrode active material. For example, a second harmonic wave (532 nm) of a YAG laser is preferable, and an Hg lamp (300 nm to 400 nm) may be used. When less than or equal to the upper temperature limit of base 11, the base 11 and a laminate including each layer may be heated while emitting a laser beam.

The laser beam emitted from the light source through an optical system formed by optical elements such as a cylindrical lens irradiates an upper surface 13a of the positive electrode active material layer 13, sequentially scans the upper surface 13a in a predetermined direction, and anneals the entire upper surface 13a. When observing the upper surface of the positive electrode active material layer 13 laser-annealed in such a manner with an optical electronic microscope, a vertical stripe pattern assumed to be laser marks can be recognized.

Based on experiments and the like performed by the inventors, it is understood that when performing laser annealing, it is preferable that annealing be performed under the presence of oxygen. This is because by retrieving the oxygen released by the positive electrode active material layer 13 from the atmosphere, (111) crystals, that is, crystals having a bedded structure easily increase. Thus, for example, it is preferable that an argon (Ar) or oxygen (O₂) be used as the atmosphere, or an atmospheric environment that does not need industrial adjustments be used.

Further, from the relationship of the laser output and the processing area, the laser energy density is preferably in the range of greater than or equal to 104 mJ/cm² and less than or equal to 800 mJ/cm², more preferably in the range of greater than or equal to 300 mJ/cm² and less than or equal to 800 mJ/cm², and even further preferably in the range of greater than or equal to 400 mJ/cm² and less than or equal to 600 mJ/cm². When less than each of the above ranges, crystallization is insufficient. When exceeding each of the ranges, there is a high possibility of abrasion occurring, and a high possibility of the formed crystals being damaged.

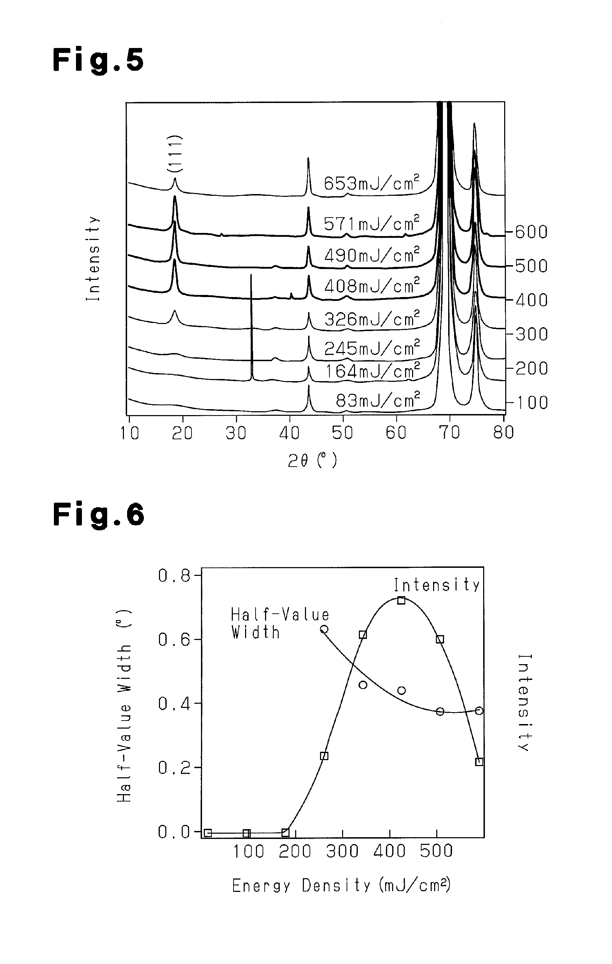

Fig. 5 shows the X-ray diffraction spectrum when using LiMn₂O₄ for the positive electrode active material layer 13 for each energy density of the laser beam emitted in the laser annealing step. A peak appears that was derived from the (111) plane at 326 mJ/cm² or greater. In particular, the diffraction intensity is high at 408 mJ/cm² to 571 mJ/cm². Further, there are hardly any peaks when exceeding 800 mJ/cm².

Fig. 6 is a graph showing the correlation of the half-value width of a peak derived from a (111) plane of LiMn₂O₄ and the intensity of the peak. The left vertical axis shows the half-peak value of the peak derived from (111) plane obtained in the X-ray diffraction. The right vertical axis shows the diffraction strength of the peak. The diffraction intensity becomes high when the energy density is 245 mJ or greater, and becomes highest at 490 mJ/cm².

More specifically, an example in which LiMn₂O₄ is used as the positive electrode material will be described. When emitting a laser beam having an energy density of 300 mJ/cm² or greater, for example, the grain diameter of crystals having a spinel structure increases. In particular, when the energy density is 400 to 600 mJ/cm², the grain diameter of crystals becomes the largest. When the energy density exceeds 800 mJ/cm², it is considered that the crystals excessively grow and become polycrystalline thereby decreasing the grain diameter. That is, a crystal precursor state is obtained at 104 mJ/cm² or greater and less than 300 mJ/cm². However, the battery properties are improved as compared with before the laser annealing, and the battery properties are further improved at 300 mJ/cm². The battery properties may be even further improved at 400 mJ/cm² or greater. When using another material as the positive electrode active material, it is considered that the crystal grain diameter can be increased when the energy density of the laser beam is in the above range (104 mJ/cm² or greater to 800 mJ/cm²).

Then, in an electrolyte layer formation step (step S14), the electrolyte layer 14 is formed to cover the positive electrode active material layer 13. The electrolyte layer 14 may be formed through the same process as the positive electrode collector layer 12, such as sputtering.

When the electrolyte layer 14 is stacked, an electrode collector layer formation step (step S15) is performed. The negative electrode collector layer 15 is formed to cover the end of the electrolyte layer 14 and a portion of the surface of the base 11. The negative electrode collector layer 15 may be formed through the same process as the positive electrode collector layer 12.

When the negative electrode collector layer 15 is formed, a negative electrode active material layer formation step (step S16) serving as a second active material layer formation step is performed. In the same manner as the positive electrode active material layer 13, the negative electrode active material layer 16 may be formed by performing sputtering, electronic beam vapor deposition, or the like.

When the negative electrode active material layer 16 is formed, a protective layer formation step (step S17) is formed. The protective layer 17 is formed to cover a portion of the positive electrode collector layer 12, a portion of the electrolyte layer 14, a portion of the negative electrode collector layer 15, and the entire negative electrode active material layer 16. When the protective layer 17 is stacked, the laminate has a height of approximately 15 µm.

When the laminate L is formed, the laminate L is used as a unit cell, and packages are formed from single or multiple cells. When using multiple cells, the cells are connected in series or in parallel, the cells are accommodated together with a protection circuit or the like in a case of plastic or the like to form a battery package.

The above embodiment has the advantages described below.
(1) In the above embodiment, the method for manufacturing the thin film lithium-ion rechargeable battery 10 includes the positive electrode active material layer formation step (step S12) that forms the positive electrode active material layer 13 on the base 11, the electrolyte layer formation step (step S14) that forms the electrolyte layer 14 on the positive electrode active material layer 13, and the negative electrode active material layer formation step (step S16) that forms the negative electrode active material layer 16 on the electrolyte layer 14. The method also includes a laser annealing step (step S13) that reforms the positive electrode active material layer 13 to a crystalline or crystal precursor state and is performed after the positive electrode active material layer formation step (step S12). Thus, although a heat treatment that exposes the laminate to high temperatures for a long period of time is not performed, at least the surface layer portion of the positive electrode active material layer 13 may have a structure in which the movability of lithium ions is high, and the battery discharge capacity may be improved. Since a laser beam is used to perform annealing, a thin base 11 having the form of, for example, a sheet, or a base 11 formed from a material having a relatively low melting point or a relatively low upper temperature limit may be used. Accordingly, the degree of freedom for selection of the base may be increased.
(3) In the first embodiment, a laser beam is emitted with an energy density of approximately 100 to 800 mJ/cm² in the annealing step. When the energy density is less than the above range, crystallization does not progress and reformation cannot be sufficiently performed. When the energy density is greater than the above range, there is a high possibility of abrasion occurring and the formation of polycrystals reduces the grain diameter. Accordingly, by setting the energy range to the above range, at least the surface layer portion of the positive electrode active material layer 13 may be sufficiently reformed and abrasion may be suppressed, while improving the reliability of the laser annealing step. Further, crystals having a structure that improves the movability of lithium ions may be maximized in grain diameter. Thus, the discharge capacity may be improved.

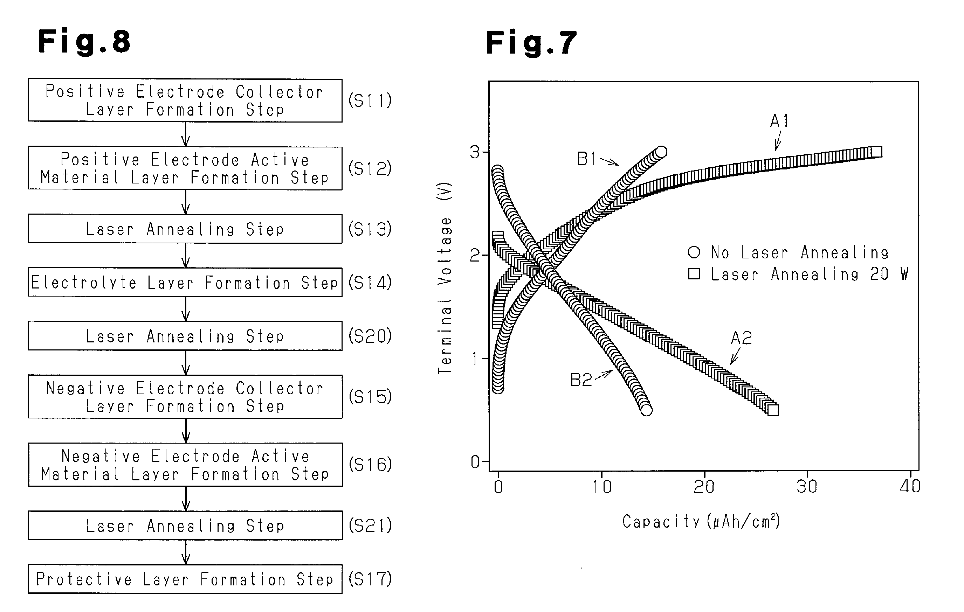

Fig. 7 is a graph showing the battery capacity (µAh/cm²) of the thin film lithium-ion rechargeable battery 10 that undergoes the laser annealing process on the positive electrode active material layer 13 formed from lithium manganese oxide (LiₓMn₂O₄) at a laser output of 20 W (energy density 104 mJ/cm²). In the drawing, graphs A1 and A2 show examples when a laser annealing process is performed, and graphs B1 and B2 show examples when a laser annealing process is not performed. Graphs A1 and B1 show changes in the battery capacity when charging is performed at a charge current 5 µ/cm² until the terminal voltage of the rechargeable battery reaches 3 V. Graphs A2 and B2 show changes in the battery capacity when discharging is performed at a discharge current 5 µA/cm² until the terminal voltage of the rechargeable battery reaches 0.5 V. As apparent from Fig. 7, the charge capacity when the layer annealing process is performed is increased by approximately 2.25 times compared to when the layer annealing process is not performed (refer to graphs A1 and B1). Further, the discharge capacity when the laser annealing process is performed is increased by approximately 1.75 times compared to when the laser annealing process is not performed (refer to graphs A2 and B2). Accordingly, the thin film lithium-ion rechargeable battery 10 of the present embodiment allows for the discharge capacity and the charge capacity to be increased.

### Second Embodiment

A second embodiment of the present invention will now be described with reference to Fig. 8. The second embodiment has a structure obtained by changing part of the method for manufacturing the thin film lithium-ion rechargeable battery of the first embodiment. Thus, the same parts will not be described.

Fig. 8 is a flowchart illustrating a method for manufacturing the thin film lithium-ion rechargeable battery 10. In the same manner as the first embodiment, the positive electrode collector layer formation step (step S11 the positive electrode active material layer formation step (step S12), the laser annealing step (step S13), and the electrolyte layer formation step (step S14) are performed.

When the electrolyte layer 14 is formed, the base 11, on which is formed the laminate including the positive electrode collector layer 12, the positive electrode active material layer 13, and the electrolyte layer 14, is transported to a laser annealing device. Then, a laser beam is emitted to the upper surface of the electrolyte layer 14 to perform a laser annealing step (S20). The laser annealing step is performed in the same manner as the laser annealing step performed on the positive electrode active material layer 13 (S13). In this manner, by also performing laser annealing on the electrolyte layer, a portion of or all of the electrolyte layer 14 may be reformed from an amorphous state to a crystalline state. Alternatively, a portion of or all of the electrolyte layer 14 may be reformed from an amorphous state to a crystal precursor state. Accordingly, the movability (moving easiness) of lithium ions may be improved.

Further, when the negative electrode collector layer 15 is formed (step S15) and the negative electrode active material layer 16 is formed (step S16), the base 11, on which is formed the laminate including the collector layers 12 and 15, the active material layers 13 and 16, and the electrolyte layer 14, is transported to the laser annealing device. Then, a laser beam is emitted to the upper surface of the negative electrode active material layer 16 to perform a laser annealing step (step S21). This laser annealing step is also performed in the same manner as the laser annealing step performed on the positive electrode active material layer 13 (step S13). By performing laser annealing on the negative electrode active material layer 16 in this manner, a portion of or all of the negative electrode active material layer 16 may be reformed from an amorphous state to a crystalline state. Alternatively, a portion of or all of the negative electrode active material layer 16 may be reformed from an amorphous state to a crystal precursor state. This ensures a passage for lithium ions and allows for easy movement of lithium ions.

When the laser annealing step is performed, the protective layer 17 is formed from above the negative electrode active material layer 16 (step S17).

Accordingly, the second embodiment has the following advantage in addition to the advantages of the first embodiment.
(4) In the second embodiment, laser annealing steps (step S13, step S20, and step S21) are performed after the positive electrode active material layer 13 is formed, after the electrolyte layer 14 is formed, and after the negative electrode active material layer 16 is formed. Thus, the electrolyte layer 14 and the negative electrode active material layer 16 are reformed, while the degree of freedom is improved for the base 11. This improves the movability of lithium ions.

### Third Embodiment

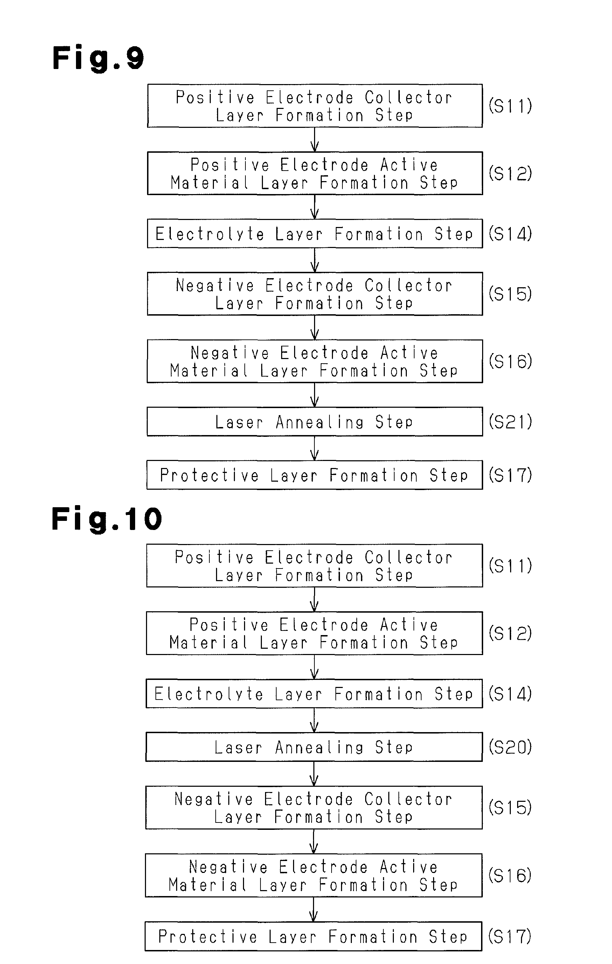

A third embodiment of the present invention will now be described with reference to Fig. 9. The third embodiment has a structure obtained by changing part of the method for manufacturing the thin film lithium-ion rechargeable battery of the first embodiment. Thus, the same parts will not be described.

Fig. 9 is a flowchart illustrating a method for manufacturing the thin film lithium-ion rechargeable battery 10. In the present embodiment, the positive electrode collector layer formation step (step S11), the positive electrode active material layer formation step (step S12), the electrolyte layer formation step (step S14), the negative electrolyte collector layer formation step (step S15), and the electrode active material layer formation step (step S16) are performed. Then, the base 11, on which is formed the laminate including the positive electrode collector layer 12, the positive electrode active material layer 13, the electrolyte layer 14, the negative electrode collector layer 15, and the negative electrode active material layer 16, is transported to the laser annealing device. Then, a laser beam is emitted from the upper surface of the negative electrode active material layer 16 to perform a laser annealing step (step S21). This laser annealing step is performed under the same conditions as the laser annealing step (step S13) of the first embodiment. In this manner, by emitting a laser beam from the upper surface of the negative electrode active material layer 16, the laser beam transmitted through the negative electrode active material layer 16 and the electrolyte layer 14 reaches the positive electrode active material layer 13, reforms the negative electrode active material layer 16 and the electrolyte layer 14, and allows the positive electrode active material layer 13 to be reformed to a crystalline or crystal precursor state. Further, the emission of the laser beam to the positive electrode active material layer 13 through the negative electrode active material layer 16 and the electrolyte layer 14 suppresses the production of a rough interface in the positive electrode active material layer 13.

Accordingly, the third embodiment has the following advantage in addition to the advantages of the first embodiment.
(5) In the third embodiment, the laser annealing step (step S21) performs laser annealing by emitting a laser beam to a laminate in which the negative electrode active material layer 16 is the uppermost layer. Thus, the negative electrode active material layer 16 and the electrolyte layer 14 are reformed, and the positive electrode active material layer 13 may be reformed to a crystalline or crystal precursor state. Consequently, the efficiency of the laser annealing step may be increased, while improving the degree of freedom for the base 11. Further, a laser beam is emitted to the positive electrode active material layer 13 through the negative electrode active material layer 16 and the electrolyte layer 14. This suppresses the production of a rough interface of the positive electrode active material layer 13.

### Fourth Embodiment

A fourth embodiment of the present invention will now be described with reference to Fig. 10. The fourth embodiment has a structure obtained by changing part of the method for manufacturing the thin film lithium-ion rechargeable battery of the first embodiment. Thus, the same parts will not be described.

Fig. 10 is a flowchart illustrating a method for manufacturing the thin film lithium-ion rechargeable battery 10. In the present embodiment, the positive electrode collector layer formation step (step S11), the positive electrode active material layer formation step (step S12), and the electrolyte layer formation step (step S14) are performed. Then, the base 11, on which is formed the laminate including the positive electrode collector layer 12, the positive electrode active material layer 13, and the electrolyte layer 14, is transported to the laser annealing device. Then, a laser beam is emitted from the upper surface of the negative electrode active material layer 16 to perform a laser annealing step (step S20). This laser annealing step is performed under the same conditions as the laser annealing step (step S13) of the first embodiment. In this manner, by emitting a laser beam from the upper surface of the negative electrode active material layer 16, the laser beam transmitted through the electrolyte layer 14 reaches the positive electrode active material layer 13, reforms the electrolyte layer 14, and allows the positive electrode active material layer 13 to be reformed to a crystalline or crystal precursor state. Further, the emission of the laser beam to the positive electrode active material layer 13 through the electrolyte layer 14 makes it difficult for a rough interface to be produced in the positive electrode active material layer 13.

Accordingly, the fourth embodiment has the following advantage in addition to the advantages of the first embodiment.
(6) In the fourth embodiment, the laser annealing step (step S21) performs laser annealing by emitting a laser beam to a laminate in which the electrolyte layer 14 is the uppermost layer. Thus, the electrolyte layer 14 is reformed so that lithium ions may easily move, and the positive electrode active material layer 13 may be reformed to a crystalline or crystal precursor state. Consequently, the efficiency of the laser annealing step may be increased, while improving the degree of freedom for the base 11. Further, a laser beam is emitted to the positive electrode active material layer 13 through the electrolyte layer 14. This suppresses the production of a rough interface of the positive electrode active material layer 13.

Each of the above embodiments may be modified as described below.

A laser annealing step may be performed after each of any two of the positive electrode active material layer formation step (step S12), the electrolyte layer formation step (step S14), and the negative electrode active material formation step (step S16). For example, the laser annealing step may be performed after the positive electrode active material layer formation step (step S12) and after the electrolyte layer formation step (step S14). Alternatively, the laser annealing step may be performed after the electrolyte layer formation step (step S14) and after the negative electrode active material formation step (step S16). As another alternative, the laser annealing step may be performed after the positive electrode active material layer formation step (step S12) and after the negative electrode active material formation step (step S16).

In the above embodiment, the positive electrode collector layer 12, the positive electrode active material layer 13 serving as the first active material layer, the electrolyte layer 14, the negative electrode collector layer 15, and the negative electrode active material layer 16 serving as the second active material layer are sequentially stacked on the base 11. However, the stacking order is not limited. For example, a negative electrode collector layer, a negative electrode active material layer serving as the first active material layer, an electrolyte layer, a positive electrode collector layer serving as the second active material layer, and a positive electrode active material layer may be sequentially stacked on the base 11. Further, the stacking state is not limited to the form of Fig. 1, and each layer of the thin film lithium-ion rechargeable battery 10 may be stacked to cover the upper surface of the lower layer.

The thin film lithium-ion rechargeable battery of the first embodiment is not limited to the structure of Fig. 1 and may have, for example, the structure shown in Fig. 11. The structure of the thin film lithium-ion rechargeable battery 20 shown in Fig. 11 is basically the same as the structure of the thin film lithium-ion rechargeable battery 10 shown in Fig. 1 but differ in that the negative electrode collector layer 15 is also stacked on the negative electrode active material layer. In the same manner as the battery structure of Fig. 1, the negative electrode collector layer 15 extends to the exterior in contact with the electrolyte layer 14 and the negative electrode active material layer 16. When manufacturing the thin film lithium-ion rechargeable battery 20 of Fig. 11, in the manufacturing method of Fig. 2, the order for performing the negative electrode collector layer formation step (step S15) and the negative electrode active material layer formation step (step S16) may be reversed. More specifically, after forming the negative electrode active material layer 16, the negative electrode collector layer 15 is formed to contact the electrolyte layer 14 and the negative electrode active material layer 16 and substantially cover the surface of the negative electrode active material layer 16. In the battery structure of Fig. 11, the order of the layers stacked on the base 11, that is, the order for stacking the positive electrode and the negative electrode may be reversed.

The structure of the thin film lithium-ion rechargeable battery 20 shown in Fig. 11 may be applied to the second embodiment, the third embodiment, and the fourth embodiment. In this case, in the manufacturing method of the second embodiment shown in Fig. 8, the negative electrode active material layer formation step (step S16) is performed after the laser annealing step (S20). Then, after performing the laser annealing step (step S21) on the negative electrode active material layer 16, the negative electrode collector layer formation step (step S15) is performed. Likewise, in the manufacturing method of the third embodiment shown in Fig. 9, after the electrolyte layer formation step (step S14), the negative electrode active material layer formation step (step S16) and the laser annealing step (S21) are performed, and then the negative electrode collector layer formation step (step S15) are performed. Also, in the manufacturing method of the fourth embodiment shown in Fig. 10, the order for performing the negative electrode collector layer formation step (step S15) and the negative electrode active material layer (step S16) may be reversed.

The method for forming the positive electrode collector layer 12, the positive electrode active material layer 13, the solid electrolyte layer 14, the negative electrode collector layer 15, and the negative electrode active material layer is not particularly limited. For example, a dry film formation process (sputtering, vapor deposition, CVD, PLD, electronic beam vapor deposition, and the like) and a wet film formation process (screen printing, offset printing, inkjet printing, spray coating, and the like) may be performed.

## Claims

1. A method for manufacturing a thin film lithium-ion rechargeable battery, the method comprising:
a first active material layer formation step of forming a first active material layer on a base;
an electrolyte layer formation step of forming an electrolyte layer on the first active material layer;
a second active material layer formation step of forming a second active material layer on the electrolyte layer; and
an annealing step of emitting a laser beam to at least one amorphous layer among the first active material layer, the electrolyte layer, and the second active material layer to reform the amorphous layer to a crystalline or crystal precursor state.

2. The method for manufacturing a thin film lithium-ion rechargeable battery according to claim 1, wherein the annealing step includes emitting a laser beam with an energy density of approximately 100 to 800 mJ/square centimeters.

3. The method for manufacturing a thin film lithium-ion rechargeable battery according to claim 1 or 2, wherein the annealing step includes emitting a laser beam to a laminate of which an uppermost layer is the electrolyte layer or the second active material layer.

4. The method for manufacturing a thin film lithium-ion rechargeable battery according to any one of claims 1 to 3, wherein the annealing step is performed after each of at least two of the first active material formation step, the electrolyte layer formation step, and the second active material layer formation step.

5. A thin-film lithium-ion rechargeable battery wherein the thin-film lithium-ion rechargeable battery is manufactured in the manufacturing method according to any one of claims 1 to 4.
